# EUROPEAN PATENT SPECIFICATION

(11) **EP 3 213 929 B1**
(45) Date of publication and mention of the grant of the patent: **17.07.2019**
(21) Application number: 15854459.3
(22) Date of filing: 17.09.2015
(51) Int. Cl.: B60C 9/20, B60C 9/18

(54) **PNEUMATIC TIRE FOR PASSENGER CARS**
LUFTREIFEN FÜR PASSAGIERFAHRZEUGE
PNEUMATIQUE POUR VOITURES DE TOURISME

(30) Priority: 29.10.2014 JP 2014220596
(43) Date of publication of application: 06.09.2017
(73) Proprietor: Bridgestone Corporation, Tokyo 104-8340 (JP)
(72) Inventor: TASHIRO, Yuichi, Tokyo 104-8340 (JP)
(74) Representative: Oxley, Robin John George
(86) International application number: PCT/JP2015/004774
(87) International publication number: WO 2016/067513

(56) References cited:
- EP-A1- 1 902 867
- WO-A1-2011/131419
- WO-A1-2015/174408
- DE-A1-102013 202 009
- JP-A- S63 315 305
- JP-A- 2007 186 057
- JP-A- 2008 126 716
- JP-A- 2008 260 343
- JP-A- 2008 265 430
- JP-A- 2011 189 873
- US-A1- 2010 200 140

## Description

### TECHNICAL FIELD

This disclosure relates to a pneumatic tire for passenger vehicle.

### BACKGROUND

Conventionally, as reinforcing members of pneumatic tire, it is known to arrange inclined belt layers having cords inclined with respect to a tire circumferential direction, on a tire radial outer side of a crown portion of a carcass spanning between bead portions.

Specifically, conventionally, as an important indicator for steering stability, sufficient cornering force has been obtained by ensuring the tire widthwise rigidity of the inclined belt layer.

However, in the case of using such reinforcing structure, there is a problem in the load dependence, such that a difference occurs in the degree of cornering force obtained depending on the degree of the load to the tire. For example, in the case where a pneumatic tire having the aforementioned reinforcing structure is installed on a small FF vehicle, of which the load to the front wheel and the load to the rear wheel are greatly different, the cornering force obtained on the front wheel is significantly larger than the cornering force obtained on the rear wheel, and thus, for example, there is a problem of a tendency of oversteering and deterioration of steering stability during cornering.

Regarding this, PTL1 suggests a tire, in which on a circumferential side of a belt layer, a belt cover layer formed of cords extending in a tire circumferential direction is arranged so as to cover an entire width of the belt layer, and a cord spacing between this belt cover layer and this belt layer is set to 0 mm or more and less than 1.0 mm in a central region within a tread portion, and is set to 1.0 mm or more and 4.0 mm or less in an intermediate region within the tread portion. According to this tire, it is regarded as possible to reduce the cornering power in a high-load region without reducing the cornering power in a low-load region, and to relax the load dependence of the cornering power.

PTL1 JP2013-35364A. Attention is also drawn to the disclosures of JP2008 260343, US2010/200140, WO2011/131419, DE 10 2013 202009, EP 1,902,867 and WO2015/174408. JP2008 260343 discloses a pneumatic tire, on which the preamble of claim 1 is based.

### SUMMARY

### (Technical Problem)

However, the tire according to PTL1 does not exhibit sufficient reduction effect to the load dependence of cornering force, in particular, the cornering force at high load, which can still be further improved.

This disclosure is to provide a pneumatic tire for passenger vehicle capable of sufficiently reducing the load dependence of cornering force.

### (Solution to Problem)

The pneumatic tire for passenger vehicle of this disclosure comprises on a tread portion a main belt formed of at least two inclined belt layers formed of a rubberized layer of cords extending in a manner inclined with respect to a tire circumferential direction, and a reinforcing belt formed of at least one circumferential belt layer formed of a rubberized layer of cords extending along the tire circumferential direction, the reinforcing belt arranged on a tire radial outer side of the main belt, the main belt and the reinforcing belt arranged spanning from a tire equatorial plain of the tread portion to shoulder portion sides, wherein a thickness between the cords of two of the inclined belt layers adjacent to each other is larger in the shoulder portions than in a central portion of the tread portion.

According to the pneumatic tire for passenger vehicle of this disclosure, it is possible to sufficiently reduce the load dependence of cornering force.

Here, in this disclosure, "extending along the tire circumferential direction" is inclusive of cases that the cords are parallel to the tire circumferential direction, and cases that the cords are slightly inclined with respect to the tire circumferential direction (an inclining angle with respect to the tire circumferential direction being 5° or less) as a result of forming a belt layer by spirally winding a strip obtained by coating a cord with rubber.

Moreover, in this disclosure, the "thickness between the cords of two of the inclined belt layers adjacent to each other" refers to a length in a tire widthwise cross-sectional view, measured from a tire radial outer side edge of a cord of an inclined belt layer on a tire radial inner side to a tire radial inner side edge of an inclined belt layer on a tire radial outer side, along a direction perpendicular to the inclined belt layer on the tire radial inner side.

Moreover, in this disclosure, the "central portion" of the tread portion refers to a portion sandwiched between positions of 30% of a tread width on the tire widthwise outer side from the tire equatorial plain, and the "shoulder portions" refer to portions on tire widthwise sides outer than the central portion. Moreover, "a thickness between the cords ... is larger in the shoulder portions than in a central portion of the tread portion" refers to either that the thickness of at least a part of the shoulder portions is larger than the thickness of the central portion, or that the thickness of the entire shoulder portions is larger than the thickness t1 of the central portion.

Moreover, in this disclosure, the "tread width" refers to a length measured between tread edges on both tire widthwise sides, along the tire width direction; the "tread edges" refer to tire widthwise outermost positions of the tread surface; the "tread surface" refers to an outer (circumferential) surface spanning the entire circumference of the tire, which contacts the road surface when rotating at a state where the tire is mounted to an applicable rim, applied with a prescribed internal pressure and applied with an air pressure corresponding to a maximum load capability. Moreover, the "predetermined internal pressure" refers to an air pressure corresponding to a maximum load capability of a single wheel (maximum air pressure) at applicable size and ply rating, as described by JATMA, etc. in the following. The "maximum load capability" refers to a maximum load capability of a single wheel at applicable size and ply rating, as described by JATMA, etc. in the following. Further, the air mentioned here may be substitutable with an inactive gas such as nitrogen gas and the like.

In this disclosure, if not specifically limited, the dimensions refer to dimensions at an unloaded condition when the tire is mounted to an applicable rim and applied with no internal pressure. Here, the "applicable rim" is a valid industrial standard for the region in which the tire is produced or used, and refers to a standard rim of an applicable size (the "Measuring Rim" in the STANDARDS MANUAL of ETRTO (the European Tyre and Rim Technical Organization), and the "Design Rim" in the "YEAR BOOK" of TRA (the Tire and Rim Association, Inc.) according to the "JATMA Year Book" of the JATMA (Japan Automobile Tire Manufacturers Association) in Japan, the "STANDARDS MANUAL" of ETRTO in Europe, or the "YEAR BOOK" of TRA in the United States of America). Moreover, "applied with no internal pressure" means filled with no internal pressure, while, for example, it is permitted to fill a low internal pressure of about 30 kPa for maintaining the case line of the tire.

In the pneumatic tire for passenger vehicle of this disclosure, the two inclined belt layers adjacent to each other have regions R on the shoulder portions on both tire widthwise sides, in which the thickness between the cords of the two inclined belt layers in the shoulder portions is 0.6 mm or more larger than a minimum value of the thickness between the cords of the two inclined belt layers in the central portion, and a total width of the regions R is 10% to 50% with respect to a width of an overlapping range in which the two inclined belt layers overlap each other. According to this configuration, it is possible to further effectively reduce the load dependence of cornering force.

In this disclosure, the "width of the regions R" and the "width of an overlapping range" refer to widths measured along the tire width direction.

In the pneumatic tire for passenger vehicle of this disclosure, it is preferable that the thickness between the cords of the two inclined belt layers adjacent to each other in the central portion has a minimum value of 0.8 mm or less. According to this configuration, it is possible to improve the entire cornering force both at low load and at high load.

In the pneumatic tire for passenger vehicle of this disclosure, it is preferable that the tensile rigidity of the reinforcing belt is larger in the reinforcing belt located on a portion, in which the thickness between the cords of the two inclined belt layers adjacent to each other is larger than the central portion, than the reinforcing belt located on the central portion.

According to this configuration, it is possible to improve the durability of the main belt.

The "tensile rigidity of the reinforcing belt" refers to a force necessary for generating a certain strain in the extension direction of the cords to a cut out unit reinforcing belt, when the unit reinforcing belt is cut out from the reinforcing belt at a tire widthwise unit width, a circumferential unit length, and a thickness inclusive of all the circumferential belt layers existing in the radial direction, and is applied with a tension in the extension direction of the cords.

### (Advantageous Effect)

According to this disclosure, it is possible to provide a pneumatic tire for passenger vehicle capable of sufficiently reducing the load dependence of cornering force.

### BRIEF DESCRIPTION OF THE DRAWINGS

FIG. 1 illustrates a cross-sectional view in the tire width direction of the pneumatic tire for passenger vehicle according to an embodiment of this disclosure; and
FIG. 2A illustrates a schematic structure of the main belt and the supplemental belt of the tire of FIG. 1, and FIG. 2B illustrates an enlarged cross-sectional view of the tread portion of the tire of FIG. 1.

### DETAILED DESCRIPTION

Hereinafter, embodiments of this disclosure will be described based on the drawings.

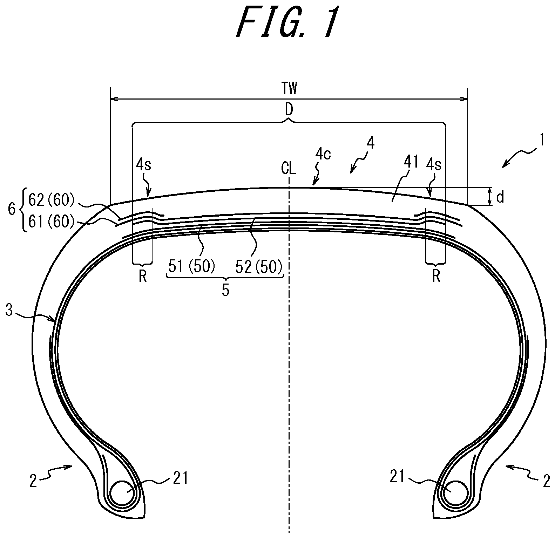

FIG. 1 illustrates a cross-sectional view in the tire width direction of the pneumatic tire for passenger vehicle (hereinafter referred to as "the tire" as well) 1 according to an embodiment of this disclosure. As illustrated in FIG. 1, the tire 1 of the present embodiment includes a carcass 3 toroidally extending between bead cores 21 embedded in a pair of bead portions 2, a main belt 5 arranged on a tire radial outer side of the carcass 3 on a tread portion 4, a reinforcing belt 6 arranged on a tire radial outer side of the main belt 5, and a tread 41 arranged on a tire radial outer side of the reinforcing belt 6. Here, the carcass 3 is formed of two carcass plies in the drawing, but can be formed of any number of plies. Moreover, the material of the cords of the carcass plies of the carcass 3 may be, e.g., steel cord, various organic fiber cords, etc., without limited thereto. Organic fiber cords, which have a significant merit of reduced weight as a pneumatic tire for passenger vehicle, is particularly preferable.

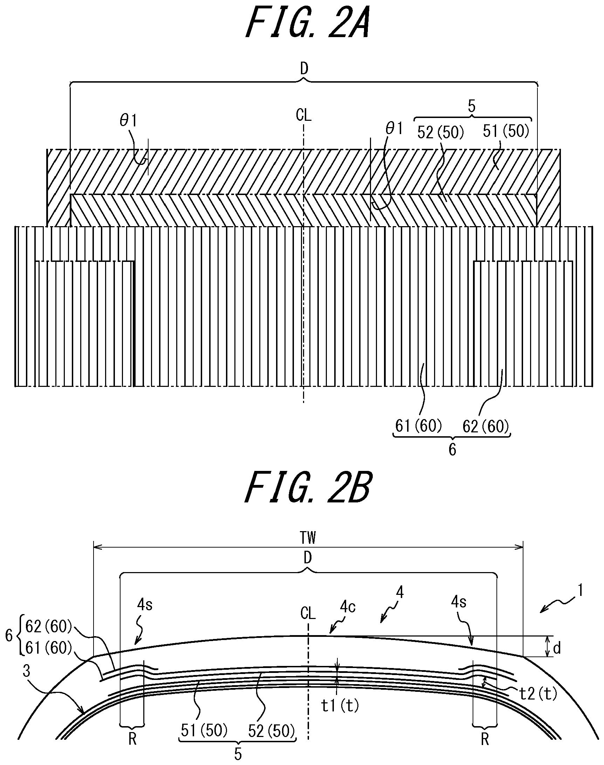

As illustrated in FIG. 2A, the main belt 5 is formed of at least two inclined belt layers 50, and is formed of two inclined belt layers 50 in the illustrated example. Moreover, the inclined belt layers 50 are formed of a rubberized layer obtained by covering with coating rubber cords extending in a manner inclined with respect to the tire circumferential direction. In the illustrated example, the cords cross each other between the inclined belt layers 50 adjacent to each other. Further, in the present embodiment, an inclination angle θ1 of the cords of each inclined belt layer 50 with respect to the tire circumferential direction is set to 10° to 30°, and in the illustrated example, the cords of each inclined belt layer 50 are inclined at substantively the same angle with respect to the tire circumferential direction, while the cords of each layer cross each other. Moreover, each inclined belt layer 50 of the present embodiment is arranged in a manner such that its tire widthwise center substantively coincides with the tire equatorial plain CL. Moreover, in the illustrated example, the main belt 5 is formed of two inclined belt layers 50, but may be formed of three of more as well.

As illustrated in FIG. 1, the main belt 5 is arranged spanning from the tire equatorial plain CL of the tread portion 4 to the shoulder portion 4s sides. Specifically, a width of the main belt 5 measured along the tire width direction is 90% to 125% with respect to a tread width TW. Moreover, in the tire 1 having two inclined belt layers 50 according to the present embodiment, a width an inclined belt layer (hereinafter referred to as "the first inclined belt layer") 51 on the tire radial inner side may be set to 90% to 125% with respect to the tread width TW, and a width of an inclined belt layer(hereinafter referred to as "the second inclined belt layer") 52 on the tire radial outer side may be set to 95% to 100% with respect to the tread width TW. Here, in the illustrated example, the width of the first inclined belt layer 51 is larger than the width of the second inclined belt layer 52, which may be reversed as well.

As illustrated in the enlarged cross-sectional view in the tread portion 4 of FIG. 2B, the main belt 5 has a thickness t between cords of two inclined belt layers 50 adjacent to each other (the first inclined belt layer 51 and the second inclined belt layer 52 here) larger in the shoulder portions 4s than in the central portion 4c of the tread portion 4. More specifically, in the illustrated example, the thickness t1 between the cords of the central portion 4c of the tread portion 4 is approximately constant, while in the shoulder portions 4s, for example, by arranging a rubber sandwiched between the cords, the thickness t is gradually increased from the tire widthwise inner side toward the outer side, to become approximately constant at a predetermined thickness t2.

As illustrated in FIG. 2A, the reinforcing belt 6 is formed of at least one circumferential belt layer 60, and the circumferential belt layers 60 are formed of a rubberized layer of cords extending along the tire circumferential direction. Moreover, the reinforcing belt 6 is arranged spanning from the tire equatorial plain CL of the tread portion 4 to the shoulder portion 4s sides.

In the present embodiment, the reinforcing belt 6 has one circumferential belt layer (hereinafter referred to as "the first circumferential belt layer" as well) 61 arranged spanning from the tire equatorial plain CL of the tread portion 4 to the shoulder portion 4s sides. Moreover, in addition to the first circumferential belt layer 61, the reinforcing belt 6 has a pair of circumferential belt layers (hereinafter referred to as "the second circumferential belt layers") 62, which are arranged on the tire radial outer sides of the first circumferential belt layer 61, on the shoulder portions 4s on both tire widthwise sides of the tread portion 4, in a manner separated from each other in the tire width direction. Therefore, in the present embodiment, there are two circumferential belt layers 60 of the reinforcing belt 6 in the shoulder portions 4s, and one in the central portion 4c. Moreover, the second circumferential belt layers 62 is arranged on the tire radial outer side of the first circumferential belt layer 61, but may be arranged on the tire radial inner side of the first circumferential belt layer 61 as well.

As illustrated in FIG. 2B, the first circumferential belt layer 61 may have a width so as to cover the entire main belt 5 in the tire width direction. Specifically, its width may be set to 80% to 120% with respect to the tread width TW. Moreover, the pair of second circumferential belt layers 62 may have a width so as to cover a portion in which the thickness t between the cords of the inclined belt layers 50 of the main belt 5 is larger than in the central portion 4c. Specifically, the width of each may be set to 10% to 30% with respect to the tread width TW.

In the present embodiment, among the main belt 5 and the reinforcing belt 6, the thickness between cords of an inclined belt layer 50 and a circumferential belt layer 60 adjacent to each other (the second inclined belt layer 52 and the first circumferential belt layer 61 in the drawing) may be set constant in the entire tire width direction. Here, the "thickness between the cords" refers to a length in the tire widthwise cross-sectional view, measured from the tire radial outer side edges of the cords of the inclined belt layers 50 to the tire radial inner side edge of the circumferential belt layer 60, along the direction perpendicular to the inclined belt layers 50.

The material of the cords of the main belt 5 is preferably steel cord, without being limited thereto. Moreover, the material of the cords of the reinforcing belt 6 is preferably cords formed of organic fibers, which may be cords formed of organic fibers such as nylon and the like, hybrid cords of aramid and nylon, etc., without being limited thereto. Here, in the present embodiment, each inclined belt layer 50 for forming the main belt 5 uses the same belt plies, and similarly, each circumferential belt layer 60 for forming the reinforcing belt 6 use the same belt plies, but different belt plies may also be used for forming the layers.

Here, the effect of the tire 1 of the present embodiment is described below.

For example, in a conventional tire, in which the thickness between cords of two inclined belt layers adjacent to each other is constant from the central portion to the shoulder portions of the tread portion, there was a tendency of load dependence that the cornering force varies depending on the load, in particular, the cornering force is increased at high load. Then, having intensively studied methods for reducing the load dependence of cornering force, we discovered the following reasons for occurrence of the load dependence of cornering force. That is, the footprint area of the tire to the road surface at high load is larger than the footprint area of the tire at low load, and thus a larger cornering force is transferred between the road surface and the tire. In order to reduce the cornering force at high load, it is necessary to reduce the in-surface flexural rigidity of the belt portion, while there was a risk that if the rigidity of the belt portion is reduced, the cornering force at low load would be greatly reduced as well.

Then, in this disclosure, as illustrated in FIG. 2B, by forming the main belt 5 in a manner such that the thickness t between the cords of two inclined belt layers 50 adjacent to each other is larger in the shoulder portions 4s than in the central portion 4c of the tread portion 4, the in-surface flexural rigidity of the main belt 5 of the shoulder portions 4s is locally reduced, which enables efficient reduction of the cornering force at high load. Therefore, it is possible to sufficiently reduce the load dependence of cornering force both at low load and at high load.

Here, in this disclosure, it is possible to achieve reduction of the load dependence of cornering force via a simple method, which is to comparatively increase the thickness t between the cords of the inclined belt layers 50 in the shoulder portions 4s. Therefore, it is unnecessary to greatly vary the structure of the tire 1 except for the main belt 5. Further, it is possible to comparatively reduce the shear stress between the layers by increasing the thickness t between cords in the shoulder portions 4s, and thus it is possible to reduce the rolling resistance of the tire 1 as well.

Here, in the present embodiment, it is preferable that the two inclined belt layers 50 adjacent to each other have regions R on the shoulder portions 4s on both tire widthwise sides, in which the thickness t2 between the cords of the two inclined belt layers 50 in the shoulder portions 4s is 0.6 mm or more larger than the thickness t1 of the central portion 4c (the minimum value of the thickness t1 when it varies; the same below); and a total width of the regions R is 10% to 50% with respect to a width of an overlapping range D (in the present embodiment, the width of the second inclined belt layer 52 with a comparatively smaller width) in which the two inclined belt layers 50 overlap each other.

According to this configuration, it is possible to further effectively reduce the load dependence of cornering force. Specifically, due to the existence of the regions R, it is possible to effectively reduce the in-surface flexural rigidity of the main belt 5 of the shoulder portions 4s, and by setting the total width of the regions R to 10% or more with respect to the width of the overlapping range D, it is possible to sufficiently reduce the cornering force at high load. Further, if the total width of the regions R is excessively large, there is a risk of reduction of the cornering force at low load. Therefore, by setting the total width of the regions R to 50% or less with respect to the width of the overlapping range D, it is possible to sufficiently ensure the cornering force at low load as well. Further, from the same viewpoint, the total width of the regions R on the aforementioned both tire widthwise sides is preferably 25% to 35% with respect to the width of the overlapping range D in which the two inclined belt layers 50 overlap each other.

Here, in the case where the thickness t2 between the cords of the two inclined belt layers 50 adjacent to each other and the thickness t1 in the central portion 4c is less than 0.6 mm, there is a risk that it is impossible to effectively reduce the load dependence of cornering force.

Moreover, if the thickness t2 of the portion in the shoulder portions 4s, of which the thickness t between the cords of two inclined belt layers 50 adjacent to each other is comparatively large, is excessively large, there is a risk that the tread rubber on the outer side of the main belt 5 becomes thin, which reduces the wear resistance. Therefore, the difference between the thickness t2 between the cords of the two inclined belt layers 50 adjacent to each other in the shoulder portions 4s and the thickness t1 between the cords in the central portion 4c is set to 3.0 mm or less.

In the present embodiment, as mentioned above, since the inclined belt layers 50 are formed of a rubberized layer obtained by covering cords with a coating rubber, in the shoulder portions 4s, for example, by arranging a rubber sandwiched between the coating rubbers of two inclined belt layers 50 adjacent to each other, it is possible to increase the thickness t between the cords comparatively in the shoulder portions 4s. Moreover, in this case, the elastic modulus of the sandwiched rubber is preferably set smaller than the elastic modulus of the coating rubber. According to this configuration, it is possible to effectively reduce the cornering force at high load.

Further, the elastic modulus of the coating rubber is preferably 5 MPa to 8 MPa, and the elastic modulus of the sandwiched rubber is preferably 1.0 MPa to 5 MPa. Here, the elastic modulus refers to the "100% modulus", which is a tensile stress at 100% elongation measured by preparing a JIS No. 3 dumbbell sample, and performing tensile test at the conditions of temperature: 30°C, speed: 500±25 mm/min, according to JIS K6251.

In the tire 1 of the present embodiment, the thickness t1 between the cords of the two inclined belt layers 50 adjacent to each other in the central portion 4c preferably has a minimum value of 0.8 mm or less. According to this configuration, it is possible to improve the in-surface flexural rigidity of the belt 5 in the central portion 4c, which affects the cornering force both at low load and at high load. Therefore, it is possible to improve the entire cornering force at low load and at high load.

Here, a smaller minimum value of the thickness t1 is capable of further improving the entire cornering force, but in order to stably produce the main belt 5, 0.2 mm or more is preferable.

Here, since the reinforcing belt 6 is formed of at least one circumferential belt layer 60 as mentioned above, it is preferable that the tensile rigidity of the reinforcing belt 6 is larger in the reinforcing belt 6 located on the portion, in which the thickness t between the cords of the two inclined belt layers 50 adjacent to each other is larger than the central portion 4c, than in the reinforcing belt 6 located on the central portion 4c. Specifically, the tensile rigidity of the portion of the reinforcing belt 6 located on the tire radial outer side of the portion of the inclined belt layer 50, of which the thickness t between the cords is comparatively large, is comparatively large. According to this configuration, it is possible to improve the durability of the main belt 5. Specifically, since within the shoulder portions 4s, tire diameter growth is likely to occur in the portion in which the thickness t between the cords is comparatively large, by comparatively increasing the tensile rigidity of the reinforcing belt 6 located on this portion, it is possible to suppress the diameter growth and improve the durability of the tire 1.

Further, from the same viewpoint, it is preferable that within the shoulder portions 4s, the tensile rigidity of the reinforcing belt 6 located on the portion in which the thickness t is comparatively large is two times or more to the reinforcing belt 6 located on the central portion 4c.

In the present embodiment, as illustrated in FIG. 2B, the reinforcing belt 6 has one first circumferential belt layer 61 arranged spanning from the tire equatorial plain CL of the tread portion 4 to the shoulder portion 4s sides, and a pair of second circumferential belt layers 62 arranged on the shoulder portions 4s on both tire widthwise sides of the tread portion 4; and the number of the circumferential belt layers 60 is two in the shoulder portion 4s, and one in the central portion 4c. Therefore, within the shoulder portions 4s, by arranging two circumferential belt layers 60 of the reinforcing belt 6 located on the portion in which the thickness t between the cords is comparatively large, the tensile rigidity of the reinforcing belt 6 becomes comparatively large as compared to the central portion 4c.

Moreover, the variation of the tensile rigidity of the reinforcing belt 6 was performed by varying the number of the circumferential belt layers 60 in the present embodiment, while on the other hand, the tensile rigidity may be varied, for example, by forming the reinforcing belt 6 with merely circumferential belt layers 60 arranged spanning from the tire equatorial plain CL to the shoulder portion 4s sides, and varying the number of cords included in the circumferential belt layers 60 located on the portion in which the thickness t between the cords of the inclined belt layers 51 is comparatively large, or varying the Young's modulus of the cords, etc.

From the aforementioned viewpoint, the reinforcing belt 6 preferably satisfies X≤200 in the entire width direction of the reinforcing belt 6 when defined as X=Y×n×m, where Y is the Young's modulus (GPa) of the cords used in its circumferential belt layers 60, n is the number of cords per 50 mm of the tire widthwise width, and m is the number of circumferential belt layers 60. According to this configuration, due to the excessively high rigidity of the reinforcing belt 6, it is possible to suppress the deterioration of the reduction effect of the load dependence of the cornering force due to the main belt 5.

In the present embodiment, it is preferable that as illustrated in FIG. 2B, a tread 41 of the tread portion 4, which is arranged on the tire radial outer side of the reinforcing belt 6 and forms the tread surface, is configured so as to have a ratio d/TW of 0.09 or less, where d (mm) is the tire radial distance between tread edges of the tire 1 and the tread surface on the tire equatorial plain CL, and TW (mm) is the tread width of the tire 1. According to this configuration, it is possible to flatten the tread surface, and to thereby increase the footprint area and to increase the variation amount of the tread 41. Therefore, it is possible to increase the cornering force, and to simultaneously reduce the load dependence of cornering force. Specifically, the increase of cornering force due to flattening of the tread surface has different contribution to the entire cornering force at low load and at high load. At low load, the increase of cornering force due to the increase of tread deformation amount generated due to flattening of the tread surface contributes more to the entire cornering force. On the other hand, at high load, the increase of cornering force contributes less to the entire cornering force as compared to low load. Therefore, by setting the tread 41 to the aforementioned shape, due to the difference of the degree of contribution at low load and at high load, it is possible to increase the cornering force, and simultaneously reduce the load dependence of cornering force.

Here, although not illustrated in FIG. 1 or FIG. 2B, the tread 41 has tread patterns of any pattern shape formed of grooves, sipes, etc. formed thereon.

The foregoing has explained an embodiment of this disclosure with reference to the drawings. However, the pneumatic tire for passenger vehicle of this disclosure is not particularly limited to the aforementioned examples, and appropriate changes may be made to the pneumatic tire of this disclosure.

### EXAMPLES

This disclosure will be described further in detail by Examples hereinafter without being restricted thereto by any means.

In order to ensure the effect of this disclosure, tires of the following examples and comparative examples were experimentally produced. The tire of Example 1 has a tire size of 225/50R17, and includes a main belt formed of two inclined belt layers (first and second inclined belt layers) of which cords cross each other between the layers, and a reinforcing belt arranged on the tire radial outer side of the main belt. Moreover, the reinforcing belt is formed of one first circumferential belt layer arranged spanning from the tire equatorial plain of the tread portion to the shoulder portions sides, and a pair of second circumferential belt layers arranged on the tire radial outer side of the first circumferential belt layer, on the shoulder portions on both tire widthwise sides of the tread portion, and separated from each other. Further, the thicknesses, etc. of the shoulder portions and the central portion between the cords of the two inclined belt layers were as shown in Table 1. Here, the coating rubbers of each belt layer have a thickness of 1.0 mm and an elastic modulus of 6.1 MPa.

The tires of Examples 2 to 7 are similar as the tire of Example 1, except for the variation of dimensions as shown in Table 1.

The tire of Comparative Example 1 is similar as the tire of Example 1, except that the thickness between the cords is constant among the shoulder portions and the central portion.

The cornering forces of each aforementioned tire of the examples and comparative examples were evaluated according to the following method.

### <Cornering force>

The tires of each embodiment and comparative example were mounted to a rim (size: 7.5J-17), applied with an internal pressure of 220 kPa, and then installed to a vehicle, and subjected to measurement on a flat belt type cornering testing machine. Here, measured was the cornering force obtained at a belt speed of the testing machine of 100 km/h under two different load conditions, i.e., under the load conditions respectively corresponding to 80% (high load) and 30% (low load) of a maximum load capability at applicable size and ply rating. Table 1 shows the results of index evaluation, with the cornering force of the tire of Comparative Example 1 at low load as 100. A larger value shows a larger cornering force.

**[Table 1]**

| | | Comparative Example 1 | Example 1 | Example 2 | Example 3 | Example 4 | Example 5 | Example 6 | Example 7 |
|---|---|---|---|---|---|---|---|---|---|
| First inclined belt layer | Inclination angle (°)*1 | 30 | 30 | 30 | 30 | 30 | 30 | 30 | 30 |
| | Width (mm)*2 | 195 | 195 | 195 | 195 | 195 | 195 | 195 | 195 |
| Second inclined belt layer | Inclination angle (°)*1 | 30 | 30 | 30 | 30 | 30 | 30 | 30 | 30 |
| | Width (mm)*2 | 180 | 180 | 180 | 180 | 180 | 180 | 180 | 180 |
| | Width of region R (mm) | - | 54 | 54 | 54 | 54 | 18 | 90 | 54 |
| Width of overlapping range with respect to total width of region R (%) | | - | 30 | 30 | 30 | 30 | 10 | 50 | 30 |
| Width between cords | Central portion (mm) | 1 | 1 | 0.8 | 1 | 1 | 1 | 1 | 1 |
| | Shoulder portion (mm) | 1 | 2.5 | 2.3 | 2.5 | 1.5 | 2.5 | 2.5 | 2.5 |
| | Thickness difference | 0 | 1.5 | 1.5 | 1.5 | 0.5 | 1.5 | 1.5 | 1.5 |
| Elastic modulus of rubber sandwiched between thick portion (MPa) | | - | 3.0 | 3.0 | 3.0 | 3.0 | 3.0 | 3.0 | 1.5 |
| First belt reinforcing layer | Width (mm)*2 | 200 | 200 | 200 | 200 | 200 | 200 | 200 | 200 |
| | Rigidity | 100 | 100 | 100 | 80 | 100 | 100 | 100 | 100 |
| Second belt reinforcing | Width (mm)*2 | 40 | 40 | 40 | 40 | 40 | 40 | 40 | 40 |
| | Rigidity | 200 | 200 | 200 | 240 | 200 | 200 | 200 | 200 |
| Cornering force | At low load | 100.0 | 104.8 | 105.9 | 104.6 | 102.0 | 100.0 | 102.8 | 105.0 |
| | At high load | 245.8 | 239.9 | 244.0 | 241.2 | 244.0 | 239.7 | 246.9 | 233.0 |
| Cornering force ratio | | 2.46 | 2.29 | 2.40 | 2.31 | 2.39 | 2.40 | 2.40 | 2.22 |

| | | | | | | | | | |
|---|---|---|---|---|---|---|---|---|---|
| *1: The angle of the cords to the tire circumferential direction *2: The width of each belt layer | | | | | | | | | |

As shown in Table 1, it is understood that each tire of Examples 1 to 7 has a cornering force ratio (a ratio of cornering forces at low load and at high load) smaller than the tire of Comparative Example 1, and thus has a sufficiently reduced load dependence of cornering force. Moreover, comparing the tires of Examples 1, 4 to 6 to the tire of Comparative example 1, it is understood that by having the regions R on the shoulder portions on both tire widthwise sides, of which the thickness t between the cords of the two inclined belt layers is 0.6 mm or more larger than the minimum value t1 of the thickness between the cords of the two inclined belt layers in the central portion, and setting the total width of the regions R to 10% to 50% to the width of the overlapping range in which the two inclined belt layers overlap each other, it is possible to reduce the load dependence of cornering force by 3%, which is an improvement with particularly desirable effect in actual vehicle.

### INDUSTRIAL APPLICABILITY

According to this disclosure, it is possible to provide a pneumatic tire for passenger vehicle capable of sufficiently reducing the load dependence of cornering force.

### REFERENCE SIGNS LIST

- 1: pneumatic tire for passenger vehicle
- 2: bead portion
- 21: bead core
- 3: carcass
- 4: tread portion
- 41: tread
- 4s: shoulder portion
- 4c: central portion
- 5: main belt
- 50: inclined belt layer
- 51: first inclined belt layer
- 52: second inclined belt layer
- 6: reinforcing belt
- 60: circumferential belt layer
- 61: first circumferential belt layer
- 62: second circumferential belt layer
- θ1: inclination angle
- CL: tire equatorial plain
- D: overlapping range
- d: distance
- R: region
- TW: tread width
- t, t1, t2: thickness between cords

## Claims

1. A pneumatic tire for passenger vehicle (1), comprising on a tread portion (4) a main belt (5) formed of at least two inclined belt layers (50, 51, 52) formed of a rubberized layer of cords extending in a manner inclined with respect to a tire circumferential direction, and a reinforcing belt (6) formed of at least one circumferential belt layer (60, 61, 62) formed of a rubberized layer of cords extending along the tire circumferential direction, with an inclining angle with respect to the tire circumferential direction being 5° or less, the reinforcing belt (6) arranged on a tire radial outer side of the main belt (5), the main belt (5) and the reinforcing belt (6) arranged spanning from a tire equatorial plain of the tread portion (4) to shoulder portion sides (4s), wherein:
a thickness (t) between the cords of two of the inclined belt layers (51, 52) adjacent to each other is larger in the shoulder portions (4s) than in a central portion (4c) of the tread portion (4);
the two inclined belt layers (51, 52) adjacent to each other have regions R on the shoulder portions (4s) on both tire widthwise sides, in which the thickness (t) between the cords of the two inclined belt layers (51, 52) in the shoulder portions (4s) is 0.6 mm or more larger than a minimum value of the thickness (t) between the cords of the two inclined belt layers (51, 52) in the central portion (4c)l; and
the difference between the thickness t2 between the cords of the two inclined belt layers 50 adjacent to each other in the shoulder portions 4s and the thickness t1 between the cords in the central portion 4c is set to 3.0 mm or less, **characterised in that** a total width of the regions R is 10% to 50% with respect of an overlapping range in which the two inclined belt layers (51, 52) overlap each other.

2. The pneumatic tire for passenger vehicle (1) according to claim 1, wherein
the thickness (t) between the cords of the two inclined belt layers (51, 52) adjacent to each other in the central portion (4c) has a minimum value of 0.8 mm or less.

3. The pneumatic tire for passenger vehicle according to claim 1 or 2, wherein
the tensile rigidity of the reinforcing belt (6) is larger in the reinforcing belt located on a portion, in which the thickness (t2) between the cords of the two inclined belt layers (51, 52) adjacent to each other is larger than the central portion (4c), than the reinforcing belt located on the central portion (4c).

4. The pneumatic tire for passenger vehicle (1) according to any one of the preceding claims, wherein
the reinforcing belt 6 has one circumferential belt layer (61) arranged spanning from the tire equatorial plain CL of the tread portion (4) to the shoulder portion (4s) sides and a pair of circumferential belt layers 62, which are arranged on the tire radial outer sides of the first circumferential belt layer (61), on the shoulder portions (4s) on both tire widthwise sides of the tread portion (4), in a manner separated from each other in the tire width direction.

5. The pneumatic tire for passenger vehicle (1) according to any one of the preceding claims, wherein
in the shoulder portions (4s), by arranging a rubber sandwiched between the coating rubbers of two inclined belt layers (50) adjacent to each other, the thickness t is larger in the shoulder portions (4s) than in the central portion (4a), and the elastic modulus of the sandwiched rubber is preferably set smaller than the elastic modulus of the coating rubber.

## Patentansprüche

1. Luftreifen für ein Passagierfahrzeug (1), der auf einem Laufflächenabschnitt (4) einen Hauptgürtel (5), der aus wenigstens zwei geneigten Gürtellagen (50, 51, 52) geformt ist, die aus einer gummierten Lage von Kords geformt sind, die sich auf eine in Bezug auf eine Reifenumfangsrichtung geneigte Weise erstrecken, und einen Verstärkungsgürtel (6), der aus wenigstens einer umlaufenden Gürtellage (60, 61, 62) geformt ist, die aus einer gummierten Lage von Kords geformt ist, die sich entlang der Reifenumfangsrichtung erstrecken, wobei ein Neigungswinkel in Bezug auf die Reifenumfangsrichtung 5° oder weniger beträgt, umfasst, wobei der Verstärkungsgürtel (6) auf einer Reifenradialaußenseite des Hauptgürtels (5) angeordnet ist, wobei der Hauptgürtel (5) und der Verstärkungsgürtel (6) so angeordnet sind, dass sie sich von einer Reifenäquatorialebene des Laufflächenabschnitts (4) zu Schulterabschnittsseiten (4s) erstrecken, wobei:
eine Dicke (t) zwischen den Kords von zwei der einander benachbarten geneigten Gürtellagen (51, 52) in den Schulterabschnitten (4s) größer ist als in einem mittleren Abschnitt (4c) des Laufflächenabschnitts (4),
die zwei einander benachbarten geneigten Gürtellagen (51, 52) Bereiche R an den Schulterabschnitten (4s) auf beiden Reifenbreitenseiten aufweisen, in denen die Dicke (t) zwischen den Kords der zwei geneigten Gürtellagen (51, 52) in den Schulterabschnitten (4s) 0,6 mm oder mehr größer ist als ein minimaler Wert der Dicke (t) zwischen den Kords der zwei geneigten Gürtellagen (51, 52) in dem mittleren Abschnitt (4c) und
die Differenz zwischen der Dicke (t2) zwischen den Kords der zwei einander benachbarten geneigten Gürtellagen (50) in den Schulterabschnitten (4s) und der Dicke (t1) zwischen den Kords in dem mittleren Abschnitt (4c) auf 3,0 mm oder weniger festgesetzt ist, **dadurch gekennzeichnet, dass** eine Gesamtbreite der Bereiche R 10 % bis 50 % in Bezug auf einen Überlappungsbereich, in dem die zwei geneigten Gürtellagen (51, 52) einander überlappen, beträgt.

2. Luftreifen für ein Passagierfahrzeug (1) nach Anspruch 1, wobei:
die Dicke (t) der Kords der zwei einander benachbarten geneigten Gürtellagen (51, 52) in dem mittleren Abschnitt (4c) einen minimalen Wert von 0,8 mm oder weniger aufweist.

3. Luftreifen für ein Passagierfahrzeug (1) nach Anspruch 1 oder 2, wobei:
die Zugsteifigkeit des Verstärkungsgürtels (6) in dem Verstärkungsgürtel, der an einem Abschnitt angeordnet ist, in dem die Dicke (t2) zwischen den Kords der zwei einander benachbarten geneigten Gürtellagen (51, 52) größer ist als in dem mittleren Abschnitt (4c), größer ist als in dem Verstärkungsgürtel, der an dem mittleren Abschnitt (4c) angeordnet ist.

4. Luftreifen für ein Passagierfahrzeug (1) nach einem der vorhergehenden Ansprüche, wobei:
der Verstärkungsgürtel (6) eine umlaufende Gürtellage (61), die so angeordnet ist, dass sie sich von der Reifenäquatorialebene CL des Laufflächenabschnitts (4) bis zu den Schulterabschnittsseiten (4s) spannt, und ein Paar von umlaufenden Gürtellagen (62) aufweist, die auf den Reifenradialaußenseiten der ersten umlaufenden Gürtellage (61), auf den Schulterabschnitten (4s) auf beiden Reifenbreitenseiten des Laufflächenabschnitts (4), auf eine in der Reifenbreitenrichtung voneinander getrennte Weise, angeordnet sind.

5. Luftreifen für ein Passagierfahrzeug (1) nach einem der vorhergehenden Ansprüche, wobei:
in den Schulterabschnitten (4s), durch Anordnen eines Gummis, der zwischen den Überzugsgummis der zwei einander benachbarten geneigten Gürtellagen (50) eingeschoben ist, die Dicke (t) in den Schulterabschnitten (4s) größer ist als in dem mittleren Abschnitt (4a) und der Elastizitätsmodul des eingeschobenen Gummis vorzugsweise kleiner festgesetzt ist als der Elastizitätsmodul des Überzugsgummis.

## Revendications

1. Pneumatique pour véhicule de tourisme (1), comprenant sur une portion formant bande de roulement (4) une ceinture principale (5) formée par au moins deux couches de ceinture inclinées (50, 51, 52) formées par une couche caoutchoutée de fils câblés s'étendant d'une manière inclinée par rapport à une direction circonférentielle de pneumatique, et une ceinture de renfort (6) formée par au moins une couche de ceinture circonférentielle (60, 61, 62) formée par une couche caoutchoutée de fils câblés s'étendant le long de la direction circonférentielle de pneumatique, avec un angle d'inclinaison par rapport à la direction circonférentielle de pneumatique qui est de 5° ou moins, la ceinture de renfort (6) étant agencée sur un côté externe radial de pneumatique de la ceinture principale (5), la ceinture principale (5) et la ceinture de renfort (6) étant agencées en s'étirant depuis un plan équatorial de pneumatique de la portion formant bande de roulement (4) vers des côtés formant portion d'épaulement (4s), dans lequel :
une épaisseur (t) entre les fils câblés de deux des couches de ceinture inclinées (51, 52) adjacentes l'une à l'autre est plus grande dans les portions d'épaulement (4s) que dans une portion centrale (4c) de la portion formant bande de roulement (4) ;
les deux couches de ceinture inclinées (51, 52) adjacentes l'une à l'autre ont des régions R sur les portions d'épaulement (4s) sur les deux côtés dans le sens de la largeur de pneumatiques, où l'épaisseur (t) entre les fils câblés des deux couches de ceinture inclinées (51, 52) dans les portions d'épaulement (4s) est de 0,6 mm ou plus supérieure à une valeur minimum de l'épaisseur (t) entre les fils câblés des deux couches de ceinture inclinées (51, 52) dans la portion centrale (4c) ; et
la différence entre l'épaisseur (t2) entre les fils câblés des deux couches de ceinture inclinées (50) adjacentes l'une à l'autre dans les portions d'épaulement (4s) et l'épaisseur (t1) entre les fils câblés dans la portion centrale (4c) est établie à 3,0 mm ou moins, **caractérisé en ce qu'**une largeur totale des régions R est de 10 % à 50 % par rapport à une plage de chevauchement dans laquelle les deux couches de ceinture inclinées (51, 52) se chevauchent.

2. Pneumatique pour véhicule de tourisme (1) selon la revendication 1, dans lequel
l'épaisseur (t) entre les fils câblés des deux couches de ceinture inclinées (51, 52) adjacentes l'une à l'autre dans la portion centrale (4c) a une valeur minimum de 0,8 mm ou moins.

3. Pneumatique pour véhicule de tourisme selon la revendication 1 ou 2, dans lequel
la rigidité à la tension de la ceinture de renfort (6) est plus grande dans la ceinture de renfort située sur une portion où l'épaisseur (t2) entre les fils câblés des deux couches de ceinture inclinées (51, 52) adjacentes l'une à l'autre est plus grande que la portion centrale (4c), que la ceinture de renfort située sur la portion centrale (4c).

4. Pneumatique pour véhicule de tourisme (1) selon l'une quelconque des revendications précédentes, dans lequel
la ceinture de renfort (6) a une couche de ceinture circonférentielle (61) agencée en s'étirant depuis le plan équatorial (CL) de la portion formant bande de roulement (4) vers les côtés de portion d'épaulement (4s) et une paire de couches de ceinture circonférentielles (62), qui sont agencées sur les côtés externes radiaux de pneumatique de la première couche de ceinture circonférentielle (61), sur les portions d'épaulement (4s) sur les deux côtés dans le sens de la largeur de pneumatique de la portion formant bande de roulement (4), d'une manière séparée l'une de l'autre dans la direction de largeur de pneumatique.

5. Pneumatique pour véhicule de tourisme (1) selon l'une quelconque des revendications précédentes, dans lequel
dans les portions d'épaulement (4s), en agençant un caoutchouc pris en sandwich entre les caoutchoucs de revêtement de deux couches de ceinture inclinées (50) adjacentes l'une à l'autre, l'épaisseur (t) est plus grande dans les portions d'épaulement (4s) que dans la portion centrale (4a), et le module d'élasticité du caoutchouc pris en sandwich est de préférence établi pour être plus petit que le module d'élasticité du caoutchouc de revêtement.
